# FASCICULE DE BREVET EUROPEEN

(11) **EP 1 011 992 B1**
(45) Date de publication et mention de la délivrance du brevet: **06.03.2002**
(21) Numéro de dépôt: 97953704.0
(22) Date de dépôt: 26.11.1997
(51) Int. Cl.: B60C 9/22, B60C 9/18

(54) **ARMATURE DE SOMMET POUR PNEUMATIQUE**
VERSTÄRKUNGSGÜRTEL FÜR REIFEN
TOP REINFORCEMENT FOR TYRE

(30) Priorité: 06.12.1996 FR 9615129
(43) Date de publication de la demande: 28.06.2000
(73) Titulaire: Compagnie Générale des Etablissements MICHELIN-MICHELIN & CIE, 63040 Clermont-Ferrand Cedex 09 (FR)
(72) Inventeur: DURIF, Pierre, F-63530 Enval (FR)
(74) Mandataire: Devaux, Edmond-Yves
(86) Numéro de dépôt international: EP9706603
(87) Numéro de publication internationale: WO9824644

(56) Documents cités:
- EP-A- 0 093 451
- EP-A- 0 280 674
- FR-A- 1 290 231
- FR-A- 2 566 334
- GB-A- 2 002 699
- US-A- 4 691 752

## Description

La présente invention concerne un pneumatique radial, destiné à équiper des véhicules "Poids-Lourds", de Génie Civil ou agricoles, tels que, par exemple, camions, bus, remorques, tracteurs d'ensembles routiers, engins de terrassement ou tracteurs agricoles, et plus particulièrement l'armature de sommet d'un tel pneumatique.

Une telle armature est actuellement constituée de plusieurs nappes de sommet : généralement de deux demi-nappes dites de triangulation, disposées sur l'armature de carcasse, de part et d'autre du plan équatorial du pneumatique, et composées de câbles métalliques inextensibles faisant avec la direction circonférentielle un angle pouvant être compris entre 45° et 90° ; ces demi-nappes de triangulation sont radialement surmontées de deux nappes de câbles métalliques inextensibles, croisés d'une nappe à la suivante et formant avec la direction circonférentielle des angles compris entre 10° et 30°. Les deux nappes à faible angle, dites nappes de travail, sont complétées radialement au-dessus par au moins une nappe de câbles métalliques extensibles et élastiques ayant généralement même direction que les câbles sous-jacents de la nappe de travail radialement adjacente. La ou les nappes de câbles élastiques sont dites de protection.

Une telle architecture d'armature de sommet conduit, dans des conditions sévères de roulage, à des séparations entre bords de nappes de sommet de travail, lesdits bords étant le lieu privilégié de contraintes de cisaillement qui conduisent à la déchirure des couches de caoutchouc vulcanisé qui séparent lesdits bords et à la séparation des nappes de travail, jusqu'à dégradation complète de l'armature de sommet.

De nombreuses solutions ont été proposées afin de remédier à ce problème, ou du moins atténuer les inconvénients cités. Il est ainsi possible de placer entre les bords des nappes de sommet de travail des coins ou coussins de caoutchouc afin de réduire lesdites contraintes de cisaillement inter-nappes.

Suite à l'hypothèse, selon laquelle l'expansion de l'armature de sommet du pneumatique en fonction de la pression de gonflage créerait des précontraintes de cisaillement inter-nappes très préjudiciables à l'endurance de l'armature de sommet, il a été proposé de disposer radialement entre l'arrnature de carcasse et l'armature de sommet au moins deux nappes de câbles métalliques pratiquement inextensibles et faisant avec la direction circonférentielle un angle faible, de préférence égal à 5°, ces nappes ayant pour fonction de ceinturer, fretter au maximum l'armature de carcasse radiale sous-jacente, qui sous l'effet de la pression interne de gonflage a tendance à augmenter son développement circonférentiel tout en augmentant sa courbure transversale, tendance qui va croissante avec la durée de roulage du pneumatique. Le pneumatique décrit, par exemple, dans la demande française FR 2 452 390 répond à la définition ci-dessus.

Les câbles inextensibles des nappes de frettage ci-dessus ont été par la suite remplacés par des câbles extensibles, et le faible angle est devenu nul ou considéré comme nul, lesdites nappes étant toujours placées entre l'armature de carcasse et l'armature de sommet. Un tel pneumatique est décrit dans la demande US 4 934 429.

Les solutions décrites ci-dessus sont coûteuses et sensibles d'emploi, plus particulièrement dans le cas des pneumatiques pour "Poids-Lourds" de rapport de forme inférieur à l'unité. De nombreux inventeurs, et pour certains depuis longtemps, ont pensé à remplacer les armatures de sommet formées de nappes de câbles croisés, ou les armatures de sommet mixtes formées de nappes de câbles croisés et de nappes de câbles circonférentiels, par des armatures formées d'éléments de renforcement exclusivement circonférentiels.

Le brevet FR 1 198 141 décrit un pneumatique ayant une surface externe de roulement à peu près cylindrique Entre l'armature de carcasse et la bande de roulement est disposé une armature de frettage formée d'un ou plusieurs éléments de renforcement circonférentiels noyés dans une matière plastique.

Le brevet FR 2 429 678 préconise une telle armature de sommet de câbles circonférentiels pour un pneumatique dont le rapport de forme est compris entre 0,40 et 0,65, l'armature étant obtenue par enroulement d'un câble en hélice avec un pas qui est de 1 à 4 fois le diamètre du câble.

La demande EP 0 093 451-A2, après avoir exposé que l'utilisation exclusive de câbles circonférentiels pour la constitution d'une armature de sommet a été abandonnée au profit d'armatures plus complexes permettant l'obtention d'une rigidité latérale suffisante pour répondre à l'action des forces transversales subies par le pneumatique roulant en dérive, propose néanmoins une architecture d'armature de sommet avec des câbles circonférentiels enrobés dans une couche de caoutchouc à haut module d'élasticité possédant des propriétés très spécifiques afin d'améliorer, d'abaisser la résistance au roulement du pneumatique.

L'idée de l'utilisation d'un enrobage à très haut module est reprise dans la demande EP 0 200 055-A2 dans le but apparent d'améliorer les propriétés de tenue de cap du pneumatique décrit dans la demande EP citée précédemment.

Le brevet US 4 691 752, dans le but de réduire voire d'annuler la poussée transversale à dérive 0 appelée plus communément "ply-steer", propose la combinaison d'une nappe de sommet de câbles circonférentiels avec une ceinture constituée de caoutchouc renforcé de fibres courtes et ayant une rigidité à la tension au moins égal à 10 kg/mm².

La demande EP 0 280 674-A2 décrit un pneumatique selon le préambule de la revendication 1, comprenant une armature de sommet composée d'au moins trois nappes d'éléments de renforcement métalliques entre une armature de carcasse radiale et une bande de roulement, l'une au moins des dites nappes étant disposée entre une nappe radialement intérieure et une nappe radialement extérieure, et étant constituée de deux parties latérales entre lesquelles est prévue une couche de caoutchouc dont la dureté Shore A est inférieure d'au moins 10 points à la dureté Shore du mélange caoutchouteux utilisé pour les nappes de sommet. Ladite couche de caoutchouc axialement entre parties latérales peut avoir un profil lenticulaire.

Les solutions proposées ci-dessus ne permettent pas d'obtenir la résistance à l'usure satisfaisante d'un pneumatique destiné à porter de lourdes charges et à rapport de forme inférieur à 1, tout en conservant une très bonne endurance générale, et tel que le montage de tels pneumatiques permette l'amélioration du comportement du véhicule équipé sur route, en particulier lorsqu'il s'agit de minimiser les effets dus à l'orniérage des routes.

Afin de supprimer les problèmes de séparation entre nappes d'armature de sommet tout en obtenant une bonne résistance à l'usure, une tenue de route suffisante ainsi qu'une résistance au roulement moindre, l'invention propose un pneumatique, comprenant d'une part une armature de carcasse formée d'au moins une nappe de câbles radiaux et d'autre part une armature de sommet formée d'au moins une nappe d'éléments de renforcement continus, surmontée radialement de plusieurs couches de caoutchouc, bande de roulement incluse, ladite nappe quasi cylindrique d'éléments de renforcement étant composée d'éléments principaux métalliques, et étant surmontée d'une lentille de caoutchouc, de section transversale sous forme de croissant, avec une épaisseur maximale au moins égale à une fois la dimension radiale maximale des éléments de renforcement principaux, et une largeur axiale au plus égale à 80% de la largeur axiale de la nappe d'éléments de renforcement, caractérisé en ce que les dits éléments de renforcement principaux sont des éléments circonférentiels inextensibles, pouvant éventuellement être séparés par des éléments de renforcement secondaires, lesdits éléments de renforcement principaux ayant des dimensions transversale et radiale minimales au moins égales à 0,09 fois la racine carrée du rayon circonférentiel R_{S} de ladite nappe, ladite nappe d'éléments de renforcement ayant un coefficient de remplissage au moins égal à 0,70, et une largeur axiale au moins égale à 0,70S, S étant la largeur axiale maximale du pneumatique, monté sur sa jante service et gonflé à sa pression de service, et au moins égale à 90% de la largeur axiale de la bande de roulement, et ladite lentille de caoutchouc ayant un module sécant, mesuré à 10% d'allongement relatif, au moins égal à 20 MPa.

La nappe d'éléments de renforcement circonférentiels est dite quasi-cylindrique si son rayon de courbure transversal est, dans la largeur définie pour la lentille de caoutchouc, au moins égal à 3 fois son rayon circonférentiel R_{S}, que ce rayon transversal soit convexe ou concave.

Une nappe d'éléments de renforcement est un ensemble composite formé par les éléments de renforcement d'une part et par le caoutchouc d'enrobage desdits éléments d'autre part, ledit caoutchouc permettant de combler les espaces entre éléments de renforcement et d'obtenir sur les dessus et dessous des éléments des couches d'épaisseur sensiblement constante, lesdits éléments pouvant être continus ou fractionnés. Le coefficient de remplissage de la nappe est alors le rapport du volume occupé dans la nappe par les éléments de renforcement sur le volume total. La nappe d'éléments de renforcement peut ne comporter que des éléments principaux de renforcement, c'est-à-dire des éléments susceptibles de résister aux efforts de tension, compression et flexion dus au gonflage, à l'écrasement, au roulage en ligne droite et/ou avec dérive du pneumatique. Lesdits éléments principaux reprennent au moins 90% des efforts de gonflage, calculés par la formule Tₑₚ.N / R_{S·P} dans laquelle Tₑₚ est la tension des éléments principaux, N est le nombre d'éléments par cm de nappe, R_{S} le rayon circonférentiel de ladite nappe, et p la pression de gonflage du pneumatique en bars. Le coefficient de remplissage peut cependant être avantageusement augmenté par la présence d'éléments de renforcement secondaires, placés axialement entre les éléments principaux et présentant des formes telles que les surfaces, dites de couplage, axialement en regard des éléments de renforcement principaux et secondaires soient plus importantes, ce qui permet un accroissement de la rigidité au cisaillement entre éléments principaux et, en conséquence une augmentation de la rigidité transversale de l'armature de sommet.

La combinaison d'une nappe d'éléments circonférentiels, avec les caractéristiques définies ci-dessus, et d'une lentille à haut module d'élongation permet de conférer au pneumatique une tenue de route, c'est-à-dire le rapport de la force transversale, exercée par le sol sur le pneu, sur la charge verticale supportée par ledit pneu, correcte en roulage sous dérive et nettement améliorée par rapport à la tenue de route de pneumatiques à une seule nappe de sommet tels que décrits antérieurement. La tenue de route du pneumatique, conforme à l'invention, peut être augmentée par la présence radialement à l'extérieur de la lentille de caoutchouc d'au moins une nappe de protection. Ladite nappe peut être formée de câbles orientés, par rapport à la direction circonférentielle, avec un certain angle α pouvant être compris entre 30° et 90°, ce qui donne naissance à une poussée transversale résiduelle en roulage ligne droite pouvant être bénéfique dans certaines configurations d'utilisation. L'architecture préférentielle de la nappe de protection consiste à avoir deux demi-nappes de protection localisées axialement de part et d'autre du plan équatorial du pneumatique et formées de câbles métalliques faisant avec la direction circonférentielle, pour une demi-nappe un angle +α et pour l'autre demi-nappe un angle -α, α pouvant être compris entre 30° et 60°. Les angles, que font avec la direction circonférentielle les câbles des deux demi-nappes, peuvent être différents, par exemple +α pour une demi-nappe et - β pour l'autre demi-nappe.

Il est possible de remplacer les deux demi-nappes décrites ci-dessus par deux nappes continues axialement, d'éléments de renforcement croisés d'une nappe à la suivante en faisant avec la direction circonférentielle un certain angle. Lesdits éléments pourront être des fils ou câbles élastiques et faisant avec la direction circonférentielle des angles compris entre 30° et 45°. Ils pourront aussi être des fils ou câbles non élastiques et faisant avec la direction circonférentielle des angles supérieurs à 45°. Les nappes formées de tels éléments auront des résistances à la rupture par cm de nappe au moins trois fois inférieures à la résistance à la rupture de la nappe d'éléments principaux circonférentiels, et seront constituées de telle manière qu'elles ne reprennent que 10% ou moins des efforts dus au gonflage du pneumatique.

Les caractéristiques et avantages de la présente invention seront mieux compris à l'aide de la description qui suit et qui se réfère au dessin illustrant à titre non limitatif des exemples d'exécution, dessin sur lequel
- la figure 1 représente schématiquement, vu en coupe méridienne, un pneumatique conforme à l'invention,
- les figures 2A à 2E représentent schématiquement des portions de nappes de sommet où se côtoient des éléments de renforcement principaux et des éléments de renforcement secondaires,
- la figure 3A et 3B représentent schématiquement, vue en coupe méridienne et de dessus, une armature de sommet préférentielle, conforme à l'invention,
- les figures 4A et 4B représente schématiquement d'autres variantes d'armature de sommet, conformes à l'invention.

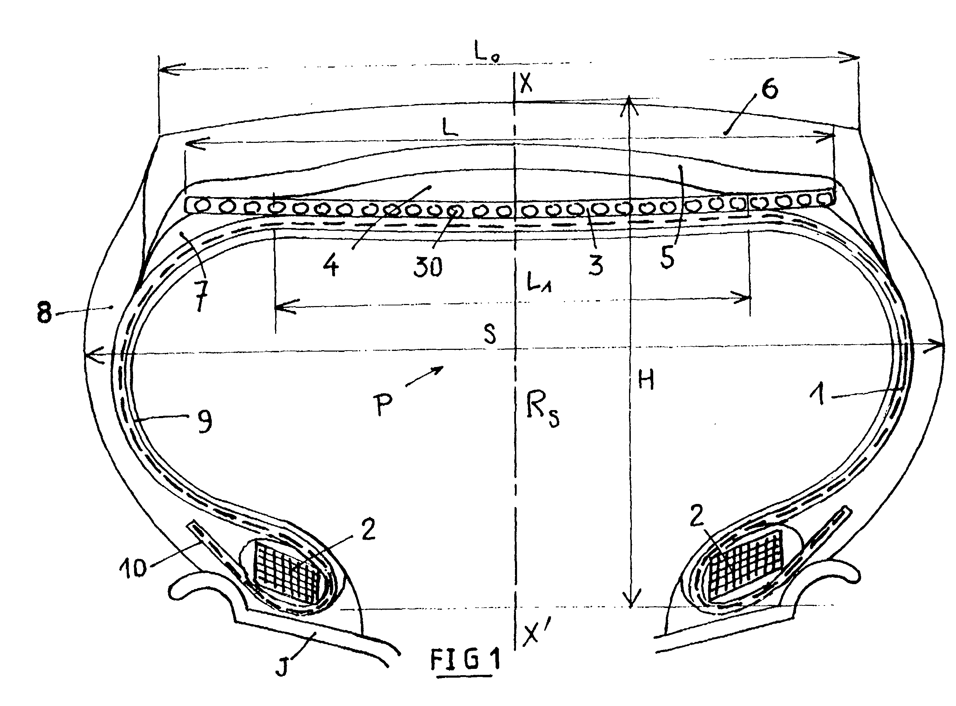

Sur la figure 1, le pneumatique "Poids-Lourds" de dimension 315/50-22.5 a un rapport de forme H/S sensiblement égal à 0,50, H et S étant respectivement la hauteur et la largeur axiale maximale du pneumatique monté sur sa jante de service J et gonflé à sa pression de service. Ledit pneumatique P comprend une armature de carcasse formée d'une seule nappe (1) de câbles en polyamide aromatique, ancrée dans chaque bourrelet par enroulement autour d'une tringle (2) pour former un retournement (10). La nappe de carcasse (1) est frettée par une seule nappe de sommet (3) formée d'éléments de renforcement (30) circonférentiels et inextensibles, éléments qui ne sont autres que des câbles métalliques en acier inextensibles, c'est-à-dire des câbles présentant sous une force égale à 10% de leur force de rupture un allongement relatif au plus égal à 0,5%. Des éléments de renforcement circonférentiels sont des éléments faisant avec la direction circonférentielle un angle égal à 0° ± 2,5°. Ces câbles, en l'absence de tout élément de renforcement secondaire, sont des câbles présentant une section transversale relativement importante par rapport à la section de câbles, normalement utilisés dans la dimension citée, pour résister aux efforts de tension générés par la pression de gonflage de service dudit pneumatique, multipliés par un coefficient de sécurité raisonnable. Les éléments de renforcement utilisés dans l'armature de sommet de la présente invention ont une section transversale circulaire de diamètre égal à 2,8 mm, ce qui correspond à 0,135 fois la racine carrée du rayon circonférentiel R_{S} de la nappe (3), et sont, dans le cas décrit, des câbles normalement constitués, c'est-à-dire formés d'une âme centrale sur laquelle sont enroulés en hélice plusieurs torons de fils élémentaires, le toronnage pouvant être à plusieurs couches. La nappe (3) a une largeur axiale L de 260 mm, soit 0,91 fois la largeur de la bande de roulement L₀, ou encore 0,82 fois la largeur axiale rnaximale S. La nappe (3) est adjacente radialement à la nappe de carcasse (1) sur une largeur importante alors que ses bords sont séparés de ladite nappe (1) par des coins de caoutchouc (7). La nappe (3) est surmontée radialement d'une lentille ou coussin de caoutchouc vulcanisé (4) en forme de croissant, avec une épaisseur maximale au niveau du plan équatorial XX' du pneumatique, épaisseur égale pour la dimension considérée à 6 mm, c'est-à-dire 2,14 fois le diamètre des câbles de la nappe (3), et une largeur axiale L₁ égale à 150 mm, soit 61% de la largeur L de la nappe (3). Le caoutchouc de la lentille (4) a un module sécant de rigidité à la tension sous 10% d'allongement relatif égal à 40 MPa. La lentille (4) est elle-même recouverte d'une couche de caoutchouc (5), dite couche de bande de roulement inférieure et dont le module de rigidité, mesuré dans les mêmes conditions que précédemment, est au plus égal à 6 MPa, c'est-à-dire très inférieur au module du même nom de la lentille (4). Une bande de roulement (6) dite supérieure complète le sommet du pneumatique, ladite bande de roulement étant réunie aux bourrelets du pneumatique par des gommes de flanc extérieures (8) et des gommes intérieures (9).

La figure 2A montre une vue très partielle d'une nappe (3) d'un pneumatique conforme à l'invention. Les éléments de renforcement (30) de cette nappe (3) ont une section transversale de forme, en soi connue, puisque elliptique, mais disposés dans la nappe (3) tels que les grands axes desdits éléments soient parallèles entre eux et parallèles au plan équatorial XX'. L'orientation préférentielle ci-dessus permet un meilleur couplage entre éléments adjacents du fait de l'augmentation de la surface efficace de couplage, c'est-à-dire la surface totale de collage des éléments adjacents sur la portion de caoutchouc d'enrobage qui les sépare. Est ainsi générée une force de cisaillement inter-éléments globale supérieure, sans que les contraintes ponctuelles au niveau de la jonction éléments - caoutchouc soient augmentées. Lesdits éléments ou câbles elliptiques peuvent être formés d'une âme (32) de forme quelconque et constituée soit de matériau plastique, soit de métal, ladite âme étant entourée soit d'un ou plusieurs fils ou câbles plastiques ou/et métalliques, soit d'une couche (33) de matériau plastique, soit d'une couche (33) de matériau élastomérique à très haut module.

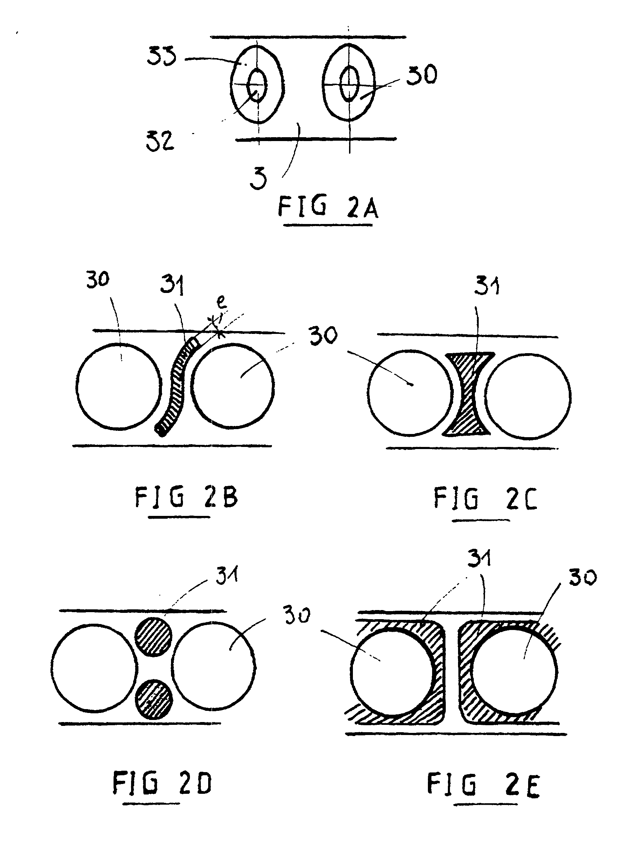

La surface efficace de couplage peut être considérablement agrandie par la présence entre deux éléments de renforcement principaux (30), qui sont en la circonstance des câbles métalliques, d'éléments de renforcement secondaires (31), comme montré sur les figures 2B à 2D. Sur la figure 213, l'élément secondaire (31) est un feuillard de métal laitonné d'épaisseur e faible, égale dans l'exemple décrit à 0,2 mm, ledit feuillard étant cintré circulairement à ses extrémités inférieure et supérieure et enroulé, pour la fabrication de la nappe, comme les éléments de renforcement principaux. Ce feuillard de section rectangulaire peut coller sur le caoutchouc d'enrobage des éléments principaux (30), et peut être fractionné le long de la circonférence de la nappe (3). Préférentiellement, le feuillard (31) présente sur sa circonférence des encoches radiales, alternées entre le bord radialement supérieur et le bord radialement inférieur du feuillard.

La figure 2C montre un élément de renforcement secondaire (31) de forme transversale optimisée : ses parois latérales sont en effet parallèles au contour transversal des éléments principaux (30), en l'occurrence des câbles de section circulaire, ce qui permet de rendre les surfaces de couplage maximales et de laisser entre les parois latérales respectivement des éléments (31) et des câbles (30) l'épaisseur de caoutchouc nominale, c'est-à-dire l'épaisseur strictement nécessaire à une adhésion suffisante entre éléments de renforcement et caoutchouc, à l'endurance du pneumatique. La structure montrée sur la figure 2D est la plus simple à utiliser industriellement, les éléments de renforcement secondaires (31) étant de simples câbles métalliques ou en matériau plastique de plus petit diamètre que celui des câbles principaux (30), et chaque intervalle entre deux éléments principaux étant pourvu de deux éléments secondaires de part et d'autre de la ligne moyenne de la nappe (3). Les trois cas précédents concernent l'addition d'éléments de renforcement secondaires séparés des éléments principaux par du caoutchouc. Il est aussi possible d'avoir des éléments de renforcement secondaires solidaires des éléments principaux tels que montrés sur la figure 2E : les câbles (30) sont alors enrobés dans des gaines pouvant être plastiques, métalliques, ou élastomériques à haut module et permettant de conférer à l'ensemble une forme transversale plus propice à générer une rigidité au cisaillement.

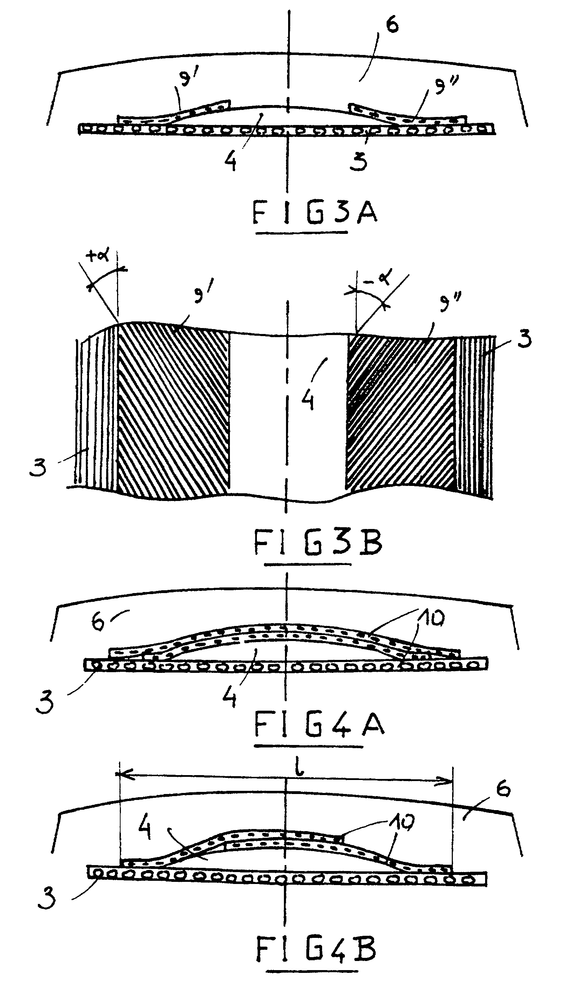

Les figures 3A et 3B représentent une variante préférentielle d'un pneumatique conforme à l'invention. Le perfectionnement apporté consiste à disposer radialement à l'extérieur de la lentille (4) de caoutchouc deux demi-nappes (9', 9") de câbles métalliques dits élastiques. Est dit élastique un câble qui, pour une force égale à 10% de la force de rupture, présente un allongement relatif au moins égal à 0,5%. Les demi-nappes (9', 9") sont, dans le cas décrit, disposées symétriquement par rapport au plan équatorial du pneumatique tant au point de vue largeurs qu'angles, les éléments de la demi-nappe (9') étant orientés avec un angle +α de + 45° et les éléments de la demi-nappe (9") étant orientés avec un angle -α de - 45° ; elles pourraient l'être dissymétriquement. La largeur axiale de chacune de ces demi-nappes est au plus égale à 48% de la largeur axiale de la nappe de frettage (3), de sorte que l'extrémité axialement extérieure de chacune soit axialement à l'intérieur de l'extrémité correspondante de la nappe (3) et que l'extrémité axialement intérieure soit séparée du plan équatorial d'une distance au moins égale à 3% de la largeur L de la nappe (3).

Sur la figure 4A est montrée la variante d'armature de sommet où la lentille de caoutchouc (4) est radialement surmontée de deux nappes (10) de câbles en polyamide aromatique croisés d'une nappe à la suivante et faisant avec la direction circonférentielle un angle de 45°, cette dernière disposition permettant d'une part d'améliorer très nettement le comportement sur route du véhicule "Poids-Lourds" équipé de pneumatiques avec de telles armatures de sommet, et d'autre part d'assurer une protection suffisante de l'armature de sommet principale dans le cas de pneumatiques de Génie Civil et de transport. La variante d'armature de sommet montrée sur la figure 4B se différencie de celle de la figure 4A par les largeurs des deux nappes (10), ladite largeur étant plus faible tout en conservant à l'ensemble des deux nappes la même largeur axiale globale, mais en ne permettant le croisement des éléments de renforcement que sur une largeur réduite au plus égale à 50% de la largeur globale 1.

## Revendications

1. Pneumatique P, comprenant d'une part une armature de carcasse formée d'au moins une nappe de câbles radiaux (1) et d'autre part une armature de sommet formée d'au moins une nappe (3) d'éléments de renforcement continus, surmontée radialement de plusieurs couches de caoutchouc, bande de roulement (6) incluse, ladite nappe (3) quasi cylindrique d'éléments de renforcement étant composée d'éléments principaux (30) métalliques, et étant surmontée d'une lentille de caoutchouc (4), de section transversale sous forme de croissant, avec une épaisseur maximale au moins égale à une fois la dimension radiale maximale des éléments de renforcement principaux (30), et une largeur axiale L₁ au plus égale à 80% de la largeur axiale L de la nappe (3) d'éléments de renforcement, **caractérisé en ce que** les dits éléments de renforcement principaux (30) sont des éléments circonférentiels inextensibles, pouvant éventuellement être séparés par des éléments de renforcement secondaires (31), lesdits éléments de renforcement principaux (30) ayant des dimensions transversale et radiale minimales au moins égales à 0,09 fois la racine carrée du rayon circonférentiel R_{S} de ladite nappe (3), ladite nappe (3) d'éléments de renforcement ayant un coefficient de remplissage au moins égal à 0,70, et une largeur axiale L au moins égale à 0,70S, S étant la largeur axiale maximale du pneumatique, monté sur sa jante service et gonflé à sa pression de service, et au moins égale à 90% de la largeur axiale L₀ de la bande de roulement, et ladite lentille de caoutchouc (4) ayant un module sécant, mesuré à 10% d'allongement relatif, au moins égal à 20 MPa.

2. Pneumatique selon la revendication 1, **caractérisé en ce que** le coefficient de remplissage est augmenté par la présence d'éléments de renforcement secondaires (31), placés axialement entre les éléments de renforcement principaux (30), et présentant des formes telles que les surfaces, dites de couplage, axialement en regard des éléments de renforcement principaux (30) et secondaires (31), soient accrues.

3. Pneumatique selon la revendication 2, **caractérisé en ce que** les éléments de renforcement secondaires (31) sont des feuillards de métal laitonné d'épaisseur e faible, chaque feuillard étant cintré circulairement à ses extrémités inférieure et supérieure, et pouvant être fractionné le long de la circonférence de la nappe (3) d'éléments de renforcement, ou présenter sur sa circonférence des encoches radiales, alternées entre son bord radialement supérieur et son bord radialement inférieur.

4. Pneumatique selon la revendication 2, **caractérisé en ce que** les éléments de renforcement secondaires (31) ont une forme transversale optimisée, leurs parois latérales étant parallèles aux contours transversaux des éléments principaux de section circulaire (30), ce qui permet de laisser entre les parois latérales respectivement des éléments de renforcement secondaires (31) et des éléments de renforcement principaux (30) l'épaisseur de caoutchouc strictement nécessaire pour avoir l'adhésion suffisante entre éléments de renforcement et caoutchouc.

5. Pneumatique selon la revendication 2, **caractérisé en ce que** les éléments de renforcement secondaires (31) sont des fils ou câbles, métalliques ou en matériau textile ou plastique, de plus petit diamètre que celui des câbles constituant les éléments de renforcement principaux (30).

6. Pneumatique selon la revendication 2, **caractérisé en ce que** les éléments de renforcement secondaires (31) sont solidaires des éléments de renforcement principaux (30), lesdits éléments de renforcement principaux (30) étant alors enrobés dans des gaines plastiques, ou élastomériques à haute dureté, ou métalliques (31), permettant de conférer à l'ensemble une forme transversale plus propice à générer une rigidité au cisaillement.

7. Pneumatique selon l'une des revendications 1 à 6, **caractérisé par** la présence radialement à l'extérieur de la lentille de caoutchouc (4) d'au moins une nappe de protection (10), formée de fils ou câbles orientés par rapport à la direction circonférentielle avec un certain angle α, compris entre 30° et 90°.

8. Pneumatique selon la revendication 7, **caractérisé par** la présence de deux nappes de protection (10) de fils ou câbles, élastiques ou non élastiques, croisés d'une nappe à la suivante en formant avec la direction circonférentielle un angle de 45°.

9. Pneumatique selon l'une des revendications 1 à 6, **caractérisé en ce que** la lentille de caoutchouc (4) est radialement surmontée de deux demi-nappes (9', 9") de câbles métalliques élastiques orientés par rapport à la direction circonférentielle d'un angle α, nappes disposées symétriquement par rapport au plan équatorial XX' du pneumatique, et ayant chacune une largeur axiale au plus égale à 48% de la largeur axiale L de la nappe de frettage (3), leurs extrémités axialement intérieures étant séparées du plan équatorial d'une distance au moins égale à 3% de la largeur L de la nappe (3) d'éléments de renforcement.

## Patentansprüche

1. Luftreifen P, der einerseits eine Karkassenbewehrung aus mindestens einer Lage von radialen Seilen (1) und andererseits eine Scheitelbewehrung aus mindestens einer Lage (3) von durchgehenden Verstärkungselementen aufweist, die radial von mehreren Kautschukschichten überlagert wird, einschließlich der Lauffläche (6), wobei die praktisch zylindrische Lage (3) von Verstärkungselementen aus metallischen Hauptelementen (30) zusammengesetzt ist und von einer Kautschuklinse (4) überlagert wird, die einen halbmondförmigen Querschnitt, eine maximale Dicke mindestens gleich einmal die maximale radiale Abmessung der Hauptverstärkungselemente (30), und eine axiale Breite L₁ höchstens gleich 80% der axialen Breite L der Lage (3) von Verstärkungselementen aufweist, **dadurch gekennzeichnet, daß** die Hauptverstärkungselemente (30) unausdehnbare Umfangselemente sind, die ggf. durch Nebenverstärkungselemente (31) getrennt werden können, wobei die Hauptverstärkungselemente (30) minimale Quer- und Radialabmessungen haben, die mindestens 0,09 mal so groß wie die Quadratwurzel des Umfangsradius R_{S} der Lage (3) sind, wobei die Lage (3) von Verstärkungselementen einen Füllkoeffzienten mindestens gleich 0,70 und eine axiale Breite L mindestens gleich 0,70S aufweist, wobei S die maximale axiale Breite des Luftreifens, der auf seine Betriebsfelge montiert und auf seinen Betriebsdruck aufgepumpt ist, und mindestens gleich 90% der axialen Breite L_{O} der Lauffläche ist, und wobei die Kautschuklinse (4) einen Sekansmodul, gemessen bei 10% relativer Längung, von mindestens gleich 20 MPa hat.

2. Luftreifen nach Anspruch 1, **dadurch gekennzeichnet, daß** der Füllkoeffizient durch das Vorhandensein von Nebenverstärkungselementen (31) vergrößert wird, die axial zwischen den Hauptverstärkungselementen (30) angeordnet sind und solche Formen haben, daß die sogenannten Koppelflächen axial vor den Haupt- (30) und Nebenverstärkungselementen (31) vergrößert werden.

3. Luftreifen nach Anspruch 2, **dadurch gekennzeichnet, daß** die Nebenverstärkungselemente (31) vermessingte Metallbänder geringer Dicke e sind, wobei jedes Band an seinem unteren und oberen Ende kreisförmig gekrümmt ist und entlang des Umfangs der Lage (3) von Verstärkungselementen gestückelt werden oder auf seinem Umfang radiale Kerben aufweisen kann, die sich zwischen seinem radial oberen und seinem radial unteren Rand abwechseln.

4. Luftreifen nach Anspruch 2, **dadurch gekennzeichnet, daß** die Nebenverstärkungselemente (31) eine optimierter Querform haben, wobei ihre Seitenwände parallel zu den Querumrissen der Hauptelemente kreisförmigen Querschnitts (30) sind, was es ermöglicht, zwischen den jeweiligen Seitenwänden der Nebenverstärkungslemente (31) bzw. der Hauptverstärkungselemente (30) die Kautschukdicke zu lassen, die unbedingt notwendig ist für eine ausreichende Haftung zwischen Verstärkungselementen und Kautschuk.

5. Luftreifen nach Anspruch 2, **dadurch gekennzeichnet, daß** die Nebenverstärkungselemente (31) Fäden oder Seile aus Metall oder Textil- oder Kunststoffmaterial kleineren Durchmessers als die Seile sind, die die Hauptverstärkungselemente (30) bilden.

6. Luftreifen nach Anspruch 2, **dadurch gekennzeichnet, daß** die Nebenverstärkungselemente (31) fest mit den Hauptverstärkungselementen (30) verbunden sind, wobei die Hauptverstärkungselemente (30) dann mit Hüllen (31) aus Kunststoff oder aus Elastomermaterial mit hoher Härte oder aus Metall ummantelt sind, was es ermöglicht, der Einheit eine Querform zu verleihen, die zur Erzeugung einer Schersteifigkeit besser geeignet ist.

7. Luftreifen nach einem der Ansprüche 1 bis 6, **gekennzeichnet durch** das Vorhandensein mindestens einer Schutzlage (10) radial außerhalb der Kautschuklinse (4), wobei die Schutzlage aus Fäden oder Seilen gebildet ist, welche in bezug auf die Umfangsrichtung mit einem bestimmten Winkel α ausgerichtet sind, der zwischen 30° und 90° liegt.

8. Luftreifen nach Anspruch 7, **gekennzeichnet durch** das Vorhandensein von zwei Schutzlagen (10) aus Fäden oder Seilen, elastisch oder unelastisch, die sich von einer Lage zur nächsten kreuzen, indem sie mit der Umfangsrichtung einen Winkel von 45° bilden.

9. Luftreifen nach einem der Ansprüche 1 bis 6, **dadurch gekennzeichnet, daß** die Kautschuklinse (4) radial von zwei Halb-Lagen (9', 9") von elastischen Metallseilen überlagert wird, die in bezug auf die Umfangsrichtung um einen Winkel α ausgerichtet sind, Lagen, die in bezug auf die Äquatorialebene XX' des Luftreifens symmetrisch angeordnet sind und je eine axiale Breite höchstens gleich 48% der axialen Breite L der Umschnürungslage (3) haben, wobei ihre axial inneren Enden von der Äquatorialebene einen Abstand von mindestens 3% der Breite L der Lage (3) von Verstärkungselementen aufweisen.

## Claims

1. A tyre P, comprising firstly a carcass reinforcement formed of at least one ply of radial cables (1) and secondly a crown reinforcement formed of at least one ply (3) of continuous reinforcement elements, radially surmounted by several layers of rubber, including the tread (6), said quasi-cylindrical ply (3) of reinforcement elements being composed of metallic main elements (30), and being surmounted by a lenticular rubber piece (4), of crescent-shaped cross-section, with a maximum thickness at least equal to one times the maximum radial dimension of the main reinforcement elements (30), and an axial width L₁ at most equal to 80% of the axial width L of the ply (3) of reinforcement elements, **characterised in that** said main reinforcement elements (30) are inextensible circumferential elements, which may possibly be separated by secondary reinforcement elements (31), said main reinforcement elements (30) having minimum transverse and radial dimensions at least equal to 0.09 times the square root of the circumferential radius R_{S} of said ply (3), said ply (3) of reinforcement elements having a fill factor which is at least equal to 0.70, and an axial width L at least equal to 0.70 S, S being the maximum axial width of the tyre, mounted on its operating rim and inflated to its operating pressure, and at least equal to 90% of the axial width L₀ of the tread, and said lenticular rubber piece (4) having a secant modulus, measured at 10% relative elongation, of at least 20 MPa.

2. A tyre according to Claim 1, **characterised in that** the fill factor is increased by the presence of secondary reinforcement elements (31), placed axially between the main reinforcement elements (30) and having shapes such that the so-called coupling surfaces axially opposite the main (30) and secondary (31) reinforcement elements are larger.

3. A tyre according to Claim 2, **characterised in that** the secondary reinforcement elements (31) are strips of brass-coated metal of low thickness e, each strip being curved circularly at its lower and upper ends and possibly being interrupted along the circumference of the ply (3) of reinforcement elements, or having radial notches on its circumference which alternate between the radially upper edge and the radially lower edge thereof.

4. A tyre according to Claim 2, **characterised in that** the secondary reinforcement elements (31) have an optimised transverse shape, their lateral walls being parallel to the transverse contours of the main elements (30) of circular section, which makes it possible to leave between the lateral walls respectively of the secondary reinforcement elements (31) and the main reinforcement elements (30) the thickness of rubber strictly necessary in order to have sufficient adhesion between reinforcement elements and rubber.

5. A tyre according to Claim 2, **characterised in that** the secondary reinforcement elements (31) are cords or cables, of metal or of textile material or of plastics material, of smaller diameter than that of the cables (30) constituting the main reinforcement elements.

6. A tyre according to Claim 2, **characterised in that** the secondary reinforcement elements (31) are integral with the main reinforcement elements (30), said main reinforcement elements (30) then being covered in sheaths (31) which are plastic, or elastomeric with high hardness, or metallic, making it possible to impart to the assembly a transverse shape more favourable for producing shearing strength.

7. A tyre according to one of Claims 1 to 6, **characterised by** the presence, radially on the outside of the lenticular rubber piece (4), of at least one protective ply (10), formed of cords or cables oriented relative to the circumferential direction at a certain angle α of between 30° and 90°.

8. A tyre according to Claim 7, **characterised by** the presence of two protective plies (10) of elastic or non-elastic cords or cables, crossed from one ply to the next, forming with the circumferential direction an angle of 45°.

9. A tyre according to one of Claims 1 to 6, **characterised in that** the lenticular rubber piece (4) is radially surmounted by two half-plies (9', 9") of elastic metal cables oriented relative to the circumferential direction by an angle α, which plies are arranged symmetrically relative to the equatorial plane XX' of the tyre, and each having an axial width of at most 48% of the axial width L of the hooping ply (3), their axially inner ends being separated from the equatorial plane by a distance equal to at least 3% of the width L of the ply (3) of reinforcement elements.
